# EUROPÄISCHE PATENTSCHRIFT

(11) **EP 1 017 191 B1**
(45) Veröffentlichungstag und Bekanntmachung des Hinweises auf die Patenterteilung: **24.05.2006**
(21) Anmeldenummer: 99125380.8
(22) Anmeldetag: 20.12.1999
(51) Int. Cl.: H04B 10/06

(54) **Verfahren zur Erfassung von störungsbehafteten Empfangssignalen**
Method for detecting received signals in the presence of interference
Procédé de discrimination des signaux reçus en présence de perturbation

(30) Priorität: 25.12.1998 DE 19860208
(43) Veröffentlichungstag der Anmeldung: 05.07.2000
(73) Patentinhaber: ROBERT BOSCH GMBH, 70442 Stuttgart (DE)
(72) Erfinder: Hog, Norbert, 77815 Buehl (DE); Gille, Andreas, 77815 Buehl (DE); Blitzke, Henry, 77815 Buehl (DE)
(74) Vertreter: Gleiss & Grosse

(56) Entgegenhaltungen:
- DE-A- 3 005 949
- DE-A- 3 336 027
- US-A- 5 390 185

## Beschreibung

Die Erfindung betrifft ein Verfahren zur Erfassung von störungsbehafteten Empfangssignalen.

### Stand der Technik

Häufig weist ein zu erfassendes Empfangssignal neben dem Nutzsignalanteil einen hohen Störsignalanteil auf. In solchen Fällen ist es erforderlich, den Nutzsignalanteil von dem Störsignalanteil zu trennen. Ein typischer Anwendungsfall sind Regensensoren für Kraftfahrzeuge, die den Benetzungsgrad einer Windschutzscheibe aufgrund der Intensität eines in die Windschutzscheibe eingekoppelten und aus dieser wieder ausgekoppelten Lichtsignals erfassen. Dabei kann aufgrund von Umgebungslichtquellen der Störlichtanteil sowohl bei Verwendung sichtbaren Lichts als auch von Infrarotlicht sehr hoch sein, im Extemfall ein Vielfaches des Nutzsignals betragen.

Aus der deutschen veröffentlichten Patentanmeldung DE 3336027 A1 ist ein optoelektronischer Empfänger bekannt, bei dem ein moduliertes Sendesignal in die Glasscheibe eingekoppelt und das an einer Photodiode empfangene Ausgangssignal erfaßt wird. Der optoelektronische Empfänger weist eine an einer Spannungsquelle angeschlossene Reihenschaltung aus der Photodiode und einer Vorrichtung zur Erzeugung einer dem Photodiodenstrom proportionalen Ausgangsspannung auf, bei welchem Empfänger zum Zwecke der Kompensierung von Störlichteinfall eine steuerbare Stromquelle und ein die Stromquelle in Abhängigkeit von Störlicht steuerndes Steuerglied vorgesehen ist. Dabei erfolgt die Steuerung der Stromquelle derart, daß eine vom Störlicht hervorgerufene Änderung des Photodiodenstroms im wesentlichen keine Änderung der Ausgangsspannung bewirkt und somit das Störlichtsignal unterdrückt ist. Nachteilig ist jedoch, daß eine Überprüfung, ob ein erfaßtes Signal tatsächlich störungsfrei ist, nicht möglich ist.

Ein weiteres Verfahren zur Erfassung störbehafteter Empfangssignale ist aus der DE-A-3005949 bekannt.

### Vorteile der Erfindung

Bei dem erfindungsgemäßen Verfahren wird zur Unterdrückung von Störsignalen ein Ausgangssignal mittels einer Rückkoppelschleife mit einer festgelegten Zeitkonstante auf einen konstanten Soll-Wert geregelt und ein gepulstes Nutzsignal als Differenz zu dem Soll-Wert erfaßt, wobei zu festgelegten Zeitpunkten Kontrollmessungen zur Erfassung des Ist-Wertes des Ausgangssignals durchgeführt werden. Das erfindungsgemäße Verfahren regelt die Ausgangsspannung immer auf den gleichen konstanten Soll-Wert. Die dabei verwendete Zeitkonstante ist jedoch so groß, daß die gepulsten Nutzsignale nicht vollständig ausgeregelt werden. Mittels der Kontrollmessungen kann überprüft werden, ob der Ist-Wert des Ausgangssignals seinem Soll-Wert entspricht. Ist dies der Fall, so kann das Ausgangssignal als störsignalfrei angenommen werden.

Das erfindungsgemäße Verfahren hat daher den Vorteil, daß eine zuverlässige und nachprüfbare Störsignalunterdrückung ermöglicht wird.

Vorzugsweise erfolgen die Kontrollmessungen eine festgelegte Zeitdauer vor und/oder nach den Nutzsignalpulsen. Ergeben die Kontrollmessungen, daß das Ausgangssignal in der Umgebung eines Nutzsignalpulses innerhalb eines festgelegten Schwellenwertes dem Soll-Wert entspricht, so kann davon ausgegangen werden, daß die Messung des Nutzsignals störungsfrei ist. Ergibt sich bei den Kontrollmessungen eine Abweichung von Ist- zu Soll-Wert des Ausgangssignals, die größer als der festgelegte Schwellenwert ist, wird die zugehörige Nutzsignalmessung verworfen. So können störungsbehaftete Messungen auf einfache Art und Weise eliminiert werden.

Die Kontrollmessung erfolgt vorzugsweise mittels Analog-/Digitalwandlung, wobei die Bewertung der Messung mittels eines Mikrocontrollers erfolgt. Das erfindungsgemäße Verfahren kann so mit schaltungstechnisch geringem Aufwand ausgeführt werden.

### Zeichnungen

Die Erfindung wird im folgenden anhand eines Ausführungsbeispiels unter Bezugnahme auf die Zeichnungen im Detail erläutert, in denen
- Figur 1: eine schematische Darstellung einer zeitlichen Abfolge von Signalen gemäß dem erfindungsgemäßen Verfahren zeigt; und
- Figur 2: schematische Nutzsignalpulse gemäß der Erfindung zeigt.

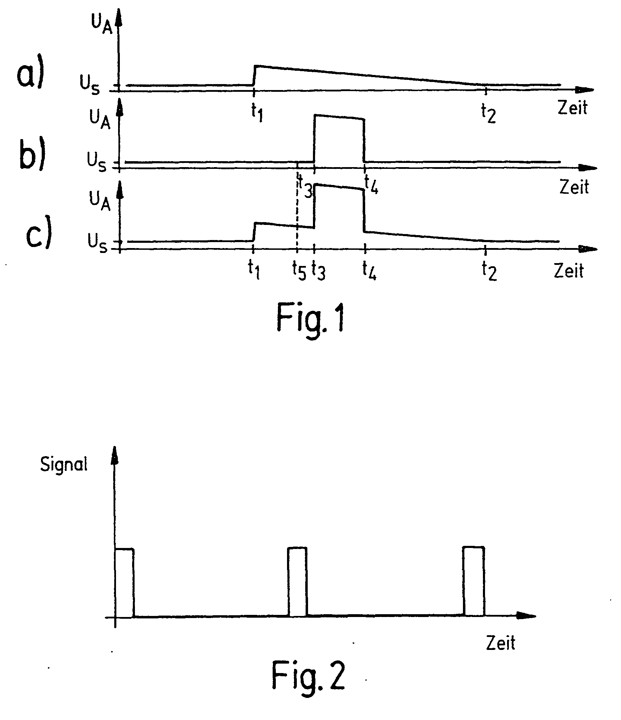

Figur 1 zeigt im Zeitverlauf ein mittels des erfindungsgemäßen Verfahrens erfaßtes Ausgangssignal U_{A}. Figur 1a zeigt den Einfluß eines Störsignals auf das Ausgangssignal. Zum Zeitpunkt t₁ ändert sich der empfangene Störsignalpegel, woraufhin die Ausgangsspannung auf einen höheren Wert ansteigt und dann durch die Rückkoppelschleife bis zum Zeitpunkt t₂ wieder auf den Sollwert U_{S} geregelt wird. Das Diagramm von Figur 1a verdeutlich somit die Arbeitsweise der Rückkoppelschleife anhand eines Störsignals.

Figur 1b zeigt den Fall der ungestörten Erfassung eines Nutzsignalpulses zwischen den Zeitpunkten t₃ und t₄. Vor und nach dem Nutzsignalpuls ist das Ausgangssignal U_{A} gleich seinem Sollwert U_{S}. Das Nutzsignal wird somit durch keine weiteren Störsignale verfälscht.

Anders ist die Situation in dem in Figur 1c illustrierten Beispiel. Das Nutzsignal zwischen den Zeitpunkten t₃ und t₄ ist einem Störsignal entsprechend Figur 1a überlagert. Dadurch ist das Meßresultat zwischen den Zeitpunkten t₃ und t₄ verfälscht; die Ausgangsspannung U_{A} ist größer als die durch den Nutzsignalpuls tatsächlich hervorgerufene Ausgangsspannung. Um dies zu erfassen, wird zum Zeitpunkt t₅ eine Kontrollmessung durchgeführt und das Ausgangssignal U_{A} gemessen und mit dem Soll-Wert U_{S} verglichen. Die Messung erfolgt vorzugsweise mittels eines Analog-/Digital-Wandlers und die Auswertung mittels einer Logikschaltung. Ist die Differenz zwischen dem Ist-Wert des Ausgangssignals und dem Soll-Wert des Ausgangssignals größer als ein festgelegter Schwellenwert, beispielsweise 10 Prozent oder 30 Prozent der Signaländerung aufgrund des Nutzsignalpulses, wird die zugehörige Messung, hier entsprechend dem Signalpuls zwischen den zwei Punkten t₃ und t₄, verworfen. Alternativ kann eine Kontrollmessung auch vor und nach dem Nutzsignalpuls erfolgen, so daß sichergestellt ist, daß nicht zwischen t₅ und t₃ ein Störsignal auftritt.

Figur 2 zeigt beispielhaft in anderer Zeitskala als Figur 1 eine Nutzsignalpulsfolge. Die Nutzsignale können eine Dauer von ca. 100 µs bei einer Signalperiode von 1 ms haben. Selbstverständlich kann der Fachmann Signaldauer, Signalperiode und Signalform entsprechend den jeweiligen Anwendungen des erfindungsgemäßen Verfahrens wählen. Ein typisches Anwendungsbeispiel sind Regensensoren zur Erfassung des Benetzungsgrades einer Glasscheibe, beispielsweise einer Kraftfahrzeug-Windschutzscheibe.

Das erfindungsgemäße Verfahren ermöglicht eine Erfassung von Nutzsignalpulsen bei zuverlässiger und nachprüfbarer Unterdrückung von Störsignalen.

## Patentansprüche

1. Verfahren zur Erfassung eines störungsbehafteten Empfangssignals aufweisend einen Nutzsignalanteil und einen Störsignalanteil, wobei zur Unterdrückung von Störsignalen mittels einer Rückkoppelschleife ein Ausgangssignal mit einer festgelegten Zeitkonstante auf einen konstanten Sollwert geregelt wird, die Zeitkonstante so groß gewählt ist, dass die im Nutzsignalanteil enthaltenen Nutzsignalimpulse nicht auf den Sollwert des Ausgangssignlals geregelt werden und der Nutzsignalanteil als eine erste Differenz zwischen dem Istwert des Ausgangssignals und dessen Sollwert ermittelt wird, **dadurch gekennzeichnet, dass** zu festgelegten Zeitpunkten, an denen das Empfangssignal keinen Nutzsignalanteil enthält, eine zweite Differenz zwischen dem Istwert des Ausgangssignals und dessen Sollwert ermittelt wird, um einen Störsignalanteil zu erkennen.

2. Verfahren nach Anspruch 1, **dadurch gekennzeichnet, daß** die Kontrollmessungen eine festgelegte Zeitdauer vor und/oder nach den Nutzsignalpulsen ausgeführt werden.

3. Verfahren nach Anspruch 2, **dadurch gekennzeichnet, daß** ein Nutzsignalpuls dann verworfen wird, wenn eine oder mehrere zugeordnete Kontrollmessungen eine Abweichung des Ist-Wertes des Ausgangssignals von dem Soll-Wert erfaßt, die über einem festgelegten Schwellenwert liegt.

4. Verfahren nach Anspruch 3, **dadurch gekennzeichnet, daß** der festgelegte Schwellenwert zwischen 10 Prozent und 30 Prozent der durch den Nutzsignalpuls hervorgerufenen Änderungen des Ausgangssignals liegt.

5. Verfahren nach einem der Ansprüche 1 bis 4, **dadurch gekennzeichnet, daß** die Kontrollmessung mittels Analog-/Digital-Wandlung ausgeführt wird und die Bewertung der Kontrollmessung mittels eines Mikrocontrollers erfolgt.

## Claims

1. Method for detection of a received signal which is subject to interference, having a useful signal component and an interference signal component, with an output signal being regulated with a defined time constant at a constant nominal value by means of a feedback loop in order to suppress interference signals, with the time constant being chosen to be sufficiently large that the useful signal pulses which are contained in the useful signal component are not regulated at the nominal value of the output signal, and the useful signal component is determined as a first difference between the actual value of the output signal and its nominal value, **characterized in that** a second difference between the actual value of the output signal and its nominal value is determined at fixed times at which the received signal contains no useful signal component, in order to identify the interference signal component.

2. Method according to Claim 1, **characterized in that** the monitoring measurements are carried out at a defined time period before and/or after the useful signal pulses.

3. Method according to Claim 2, **characterized in that** a useful signal pulse is rejected when one or more associated monitoring measurements detects or detect a discrepancy between the actual value of the output signal and the nominal value which is greater than a defined threshold value.

4. Method according to Claim 3, **characterized in that** the defined threshold value is between 10% and 30% of the changes in the output signal caused by the useful signal pulse.

5. Method according to one of Claims 1 to 4, **characterized in that** the monitoring measurement is carried out by means of analogue/digital conversion, and the monitoring measurement is assessed by means of a microcontroller.

## Revendications

1. Procédé de discrimination des signaux reçus en présence de perturbation présentant une portion de signal utile et une portion de signal de perturbation, un signal de sortie étant réglé avec une constante de temps fixée à une valeur théorique constante pour supprimer les signaux de perturbation à l'aide d'une boucle de rétroaction, la constante de temps étant si importante que les impulsions de signal utile contenues dans la portion du signal utile ne sont pas réglées à la valeur théorique du signal de sortie et que la portion du signal utile est calculée sous la forme d'une première différence entre la valeur réelle du signal de sortie et sa valeur théorique,
**caractérisé en ce qu'**
on calcule à des instants définis auxquels le signal de réception ne reçoit aucune portion de signal utile, une deuxième différence entre la valeur réelle du signal de sortie et sa valeur théorique afin de détecter une portion du signal de perturbation.

2. Procédé selon la revendication 1,
**caractérisé en ce que**
les mesures de contrôle sont réalisées pendant une durée définie avant et/ou après les impulsions de signal utile.

3. Procédé selon la revendication 2,
**caractérisé en ce qu'**
une impulsion de signal utile est rejetée lorsqu'une ou plusieurs mesures de contrôle associées détecte(nt) un écart supérieur à une valeur seuil définie entre la valeur réelle du signal de sortie et la valeur théorique.

4. Procédé selon la revendication 3,
**caractérisé en ce que**
la valeur seuil définie est comprise entre 10 et 30 pour-cent des modifications du signal de sortie dues à l'impulsion du signal utile.

5. Procédé selon l'une quelconque des revendications 1 à 4,
**caractérisé en ce que**
la mesure de contrôle est réalisée à l'aide d'une conversion analogique/numérique, et on exploite la mesure de contrôle à l'aide d'un microcontrôleur.
